# EUROPEAN PATENT SPECIFICATION

(11) **EP 0 416 631 B1**
(45) Date of publication and mention of the grant of the patent: **31.08.1994**
(21) Application number: 90117205.6
(22) Date of filing: 06.09.1990
(51) Int. Cl.: B01D 53/34

(54) **Method for removing harmful gas from refuse combustion exhaust gas**
Verfahren zum Entfernen schädlicher Gase aus Abgasen der Müllverbrennung
Méthode pour éliminer des gaz toxiques de gaz d'échappement de la combustion de déchet

(30) Priority: 06.09.1989 JP 230649/89
(43) Date of publication of application: 13.03.1991
(73) Proprietor: NKK CORPORATION, Tokyo (JP); EBARA CORPORATION, Ohta-ku Tokyo,144 (JP)
(72) Inventor: Machi, Sueo, Japan Atomic En. Res. Inst. Takasaki, Takasaki-shi, Gunma-ken (JP); Sato, Shoichi, Japan Atomic En. Res. Inst. Takasak, Takasaki-shi, Gunma-ken (JP); Tokunaga, Okihiro, Japan Atomic En. Res. Inst. Tak, Takasaki-shi, Gunma-ken (JP); Aoki, Yasushi, Japan Atomic En. Res. Inst. Takasak, Takasaki-shi, Gunma-ken (JP); Suda, Shouichi, c/o Patent & License Dept., Chiyoda-ku, Tokyo (JP); Miyachi, Tsuneharu, c/o Patent & License Dept., Chiyoda-ku, Tokyo (JP); Shibamura, Yokichi, c/o Patent & License Dept., Chiyoda-ku, Tokyo (JP); Kawamura, Keita, Fujisawa-shi, Kanagawa-ken (JP); Suzuki, Ryoji, Ohta-ku, Tokyo (JP); Agarida, Toru, Ohta-ku, Tokyo (JP)
(74) Representative: Popp, Eugen, Dr.

(56) References cited:
- EP-A- 0 250 866
- FR-A- 2 575 938
- CHEMICAL ENGINEERING PROGRESS, vol. 81, no. 10, October 1985, NEW YORK(US) pp. 33 - 38; R.J.Gleason et al.: "High-Efficiency NOx and SOx Removal by Electron Beam"

## Description

The present invention relates to a method of removing harmful gas from a refuse combustion exhaust gas.

A refuse combustion exhaust gas or incineration gas contains harmful gases of nitrogen oxides, sulfur oxides, hydrogen chlorides, and organo-chloric compounds such as dioxine and related compounds -- all generated from nitrogen, sulfur and chlorine which exist in the refuse. The allowable levels of the first three of these harmful substances are regulated by the law. More specifically, the content of nitrogen oxides should be 80 to 200 ppm or less; that of sulfur oxides should be 30 to 120 ppm or less; and that of hydrogen chlorides should be 300 to 1200 ppm or less. In order to prevent secondary pollution which may occur due to these oxides and to protect the health of people and preserve their environment, the harmful gases must be removed more efficiently from the refuse combustion exhaust gas. The standards of disposing refuse have actually been made more severe, and gas-removing processes, more complex than the conventional ones, are applied in practice.

Although the organo-chloric compound of dioxine is not regulated in our country at present, the harmfulness thereof is a serious issue. However, the real situation is that no counter-measures are planned to cope with this issue.

There are two methods generally employed for removing nitrogen oxides, sulfur oxides, and hydrogen chlorides (apart from organo-chloric compounds such as dioxine and related compounds). The first is a wet process, and the second is a semi-dry process.

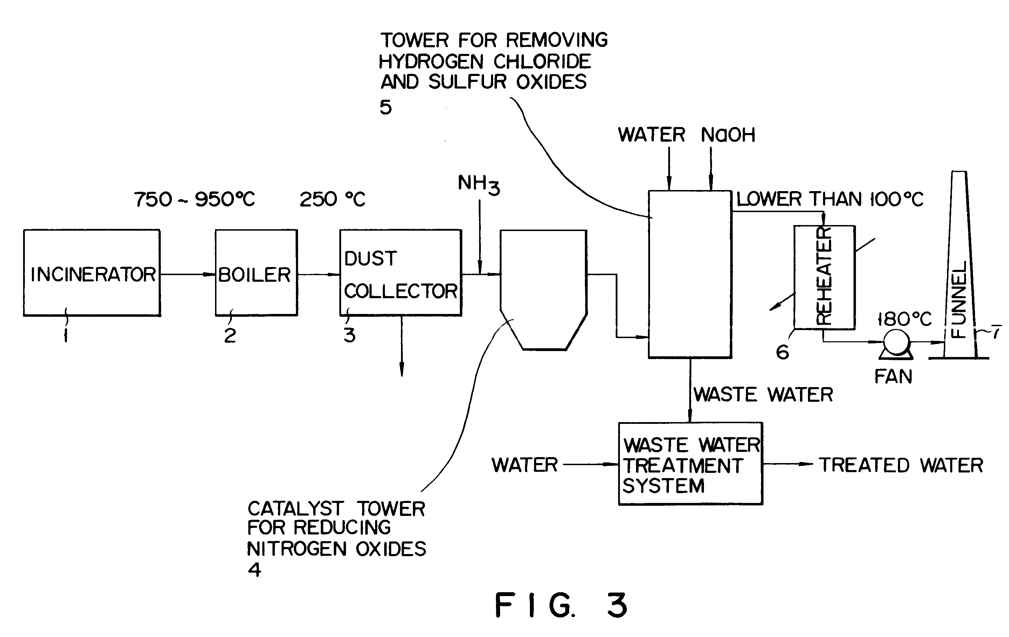

Fig. 3 shows the wet process.
1) The high temperature exhaust gas having a temperature of 750 to 950°C generated from an incinerator is cooled down to 250 to 350°C in a boiler 2.
2) Dust in the exhaust gas is removed in a dust collector 3.
3) NH₃ gas is blown and the resulting gas is led into a catalyst tower 4 for reducing nitrogen oxides. The nitrogen oxides are removed by reduction in accordance with a reaction represented by following.

   4NO + 4NH₃ + O₂ → 4N₂ + 6H₂0
4) The exhaust gas is washed in a tower 5 for removing hydrogen chloride and sulfur oxides using a large amount of water. In order to maintain a neutral washing, an alkaline material represented by a sodium hydroxide is added. The resulting reaction is as follows.

   HCl + NaOH → NaCl + H₂0

   SO₂ + 2NaOH + 1/20₂ → Na₂SO₄ + H₂O

   Salt produced by the above mentioned formulae is extracted by the washing and is separated by processes such as coagulating sedimentation, a filtration, or a biological process after dilution with fresh water.
5) Since the washed gas from which the harmful components are removed has a temperature lower than 100°C, the gas is heated to 120 to 180°C by a reheater 6. It is diffused to the air from a funnel 7. The heating is done to a) prevent a dew point corrosion of duct and funnel, b) prevent water from dropping from the top portion of the funnel, c) improve a diffusion efficiency, and d) prevent occurrence of white vapour from the funnel, and so on.

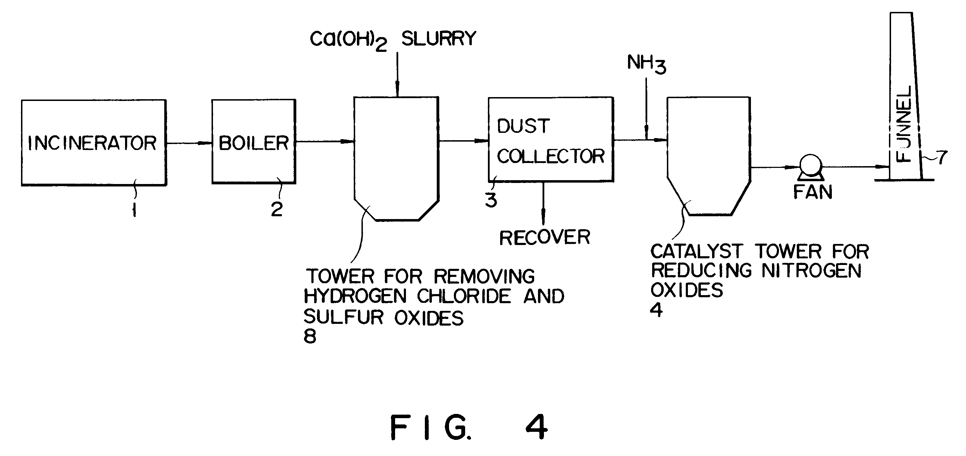

Fig. 4 shows the semi-dry process.
1) The high temperature exhaust gas having a temperature of 750 to 950°C generated from the incinerator 1 is cooled down to 250 to 350°C in the boiler 2.
2) Ca(OH)₂ slurry as the alkaline material is fed from the top portion of a tower 8 for removing hydrogen chloride and sulfur oxides, wherein the slurry is atomized finely to diffuse within the tower, thereby removing hydrogen chloride and sulfur oxides by neutralizing in accordance with reactions represented by the following.

   2HCl + 2Ca(OH)₂ → CaCl₂·Ca(OH)₂ H₂O + H₂O

   SO₂ + Ca(OH)₂ + 1/20₂ → CaS0₄ + H₂0
3) Salt which is a solid phase product produced by the above mentioned formulae is removed and recovered by the dust collector 3.
4) NH₃ gas is blown, and the, resulting gas is fed to the catalyst tower 4 for reducing the nitrogen oxides and for removing the nitrogen oxides in accordance with the following formula.

   4NO + 4NH₃ + O₂ → 4N₂ + 6H₂0
5) The treated gas is diffused to the air through the funnel 7.

Apart from the exhaust gas from the incinerator, a method for activation by irradiation of harmful gases of sulfur dioxide and nitrogen oxides from a thermal power plant, in which a fuel oil and coal are used as fuel, to realize decomposition or to render the gas harmless is shown in Japanese Laid-Open Patent No. 17471/73.

U.S.-A-4,372,832 shows a method for treating exhaust gas where a fuel including large amounts of sulfur has been used. According to this method, the exhaust gas is washed by a spray drying method and the temperature of the resulting gas is lowered to increase the hydroscopic moisture content thereof. Then, the resulting exhaust gas is contacted with electron beam radial rays.

U.S.-A-4,525,142 also discloses a method for treating exhaust gas in cases where a fuel including large amounts of sulfur was used. According to this method, first lime stone is supplied to the boiler. Then, the exhaust gas from the boiler is humidified and the temperature thereof is lowered at the same time. The resulting gas is subjected to the electron beam radial rays.

There are common problems in the wet process, as shown in Fig. 3, and the semi-dry process, as shown in Fig. 4, as can be seen in the following.
1) Since the gas temperature has to be raised to more than about 250°C in order to prevent blinding of the catalyst layers in the catalyst tower 4 for reducing the nitrogen oxides, the boiler recovery heat quantity is restricted. The blinding is caused by producing an acid ammonium sulfate (NH₄HSO₄), which leads to an unstable operation.
2) Since the catalyst used is very expensive and has to be changed or regenerated periodically, maintenance becomes very complicated.
3) In order to have the structure for preventing blinding, the volume required for the catalyst layer becomes large.
4) Since the gas temperature is high at about 250°C, the required volume for the dust collector 3 becomes large.
5) The ammonium chloride generated by excess NH₃ and hydrogen chloride is often seen as white vapour, thereby causing complaints from the residents who live in and around the incinerator.
6) Emission of NH₃ which is a poisonous substance, needs to be dealt with.
   Inherent to the wet process as shown in Fig. 3, are problems as follows.
7) A large amount of water of 0.7 m³ per 1 t of refuse is needed as makeup water for washing the gas in the tower 5 for removing hydrogen chloride and sulfur oxides.
8) Since the washing contains 3 to 5 times the salt concentration of sea water, it is not possible to make a wastewater treatment directly. Therefore, about 0.6 m³ of dilution water is needed for every 1 t of refuse.
9) Complicated equipment for wastewater treatment is needed.
10) In the reheater 6 for solving the above mentioned problems, caused by the low gas temperature after washing, a large amount of heat or about 250,000 Kcal per 1 t of refuse is needed.

Japanese Laid-Open Patent No. 17471/73 discloses the removal of the harmful gas contents in the combustion gas of fuel oil and coal, for example, sulfur dioxide and nitrogen oxides. It would be a wonder if the above invention were effective against a refuse combustion exhaust gas including larger amounts of hydrogen chloride such as ten times as much as the harmful gas disclosed therein.

EP-A 0 250 866 discloses a method and device for simultaneously separating sulfur dioxide and nitrogen oxides from exhaust gases. The exhaust gas is conditioned with respect to temperature and water content, is accelerated through a radiation chamber to speeds above 20 m/sec. and subjected to electron beam irradiation. After irradiation, the gas is contacted with an alkaline reagent and the resulting mixture is fed to a reaction chamber at speeds of 5 to 15 m/sec..

The object of the present invention is to provide an improved method for removing harmful gas in the refuse combustion exhaust gas and where it is possible to achieve space-saving for equipment, reduction of required power, simple operation controlling, and prevention of occurrence of secondary environment pollution.

According to the present invention, a method for removing harmful gas from a refuse combustion exhaust gas is provided as defined in the claims.

According to the method, after the refuse combustion exhaust gas is led to a reactor, an alkaline material is atomized and introduced into the reactor, radiation such as an electron beam is applied at the same time, and salt produced is recovered.

In one embodiment, a calcium hydroxide slurry is used as the alkaline material which produces, upon irradiation, activated radicals which activate the hydrogen chloride contained in the exhaust gas, while the radiation is also used to oxidize the nitrogen oxides to nitric acid, and to oxidize the sulfur oxides to sulfuric acid. The activated hydrogen chloride, the nitric acid, and the sulfuric acid are neutralized by the alkaline slurry at the same time to give a salt produced by such neutralization.

After the refuse combustion exhaust gas including harmful gas is fed to the reactor, an alkaline slurry is introduced to the reactor to lower the temperature of the exhaust gas to 150 to 300°C, preferably to 150 to 250°C. Radiation such as an electron beam is applied at the same time, so that the organo-chloric compound of dioxine in the exhaust gas is decomposed to render the harmful gas harmless.

According to a present method it is, possible to render the harmful gas components harmless by synchronous action in a single process having the following functions:
1) Function 1:
   If calcium hydroxide slurry as the alkaline material is atomized against the hydrogen chloride and sulfur oxides, which exist under acid conditions among the harmful gases in the exhaust gas, the following neutralization reactions occur, thereby producing a solid state product.
   Main reaction;

   2HCl + 2Ca(OH)₂

   → CaCl₂·Ca(OH)₂·H₂0 + H₂0

   Side reaction;

   S0₂ + Ca(OH)₂ + 1/20₂

   → CaS0₄ + H₂O

   At the same time, the above reaction is promoted in a complicated reaction path by a radical as shown in the next Function 2. Finally, the rejection ratio of HCl and SO₂ increases by irradiating with the radial rays.
2) Function 2:
   If the radial rays of an electron beam are directed to the peripheral portion where the above function 1 is achieved, Cl radical, O atom, OH radical, and HO₂ radicals occur when water and oxygen are present in the exhaust gas, thereby causing oxidation. That is, unreacted hydrogen chloride, sulfur oxides, and nitrogen oxides are oxidized to chlorine monoxide, sulfuric acid, and nitric acid, respectively.
   Reaction of hydrogen chloride;

   HCl → H + Cl

   Cl + 0₃ → ClO + O₂

   Cl + O → ClO

   Reaction of sulfur oxides; 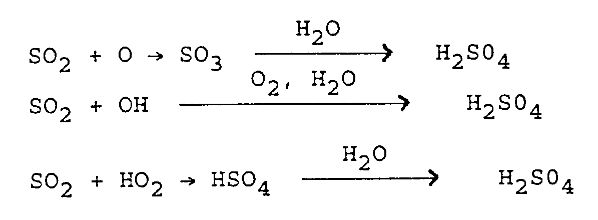 Reaction of nitrogen oxides; 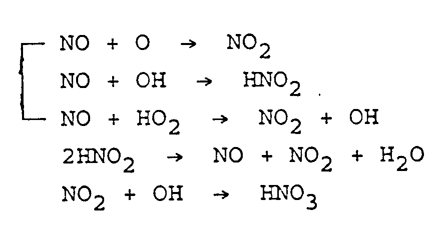
3) Function 3:
   At the same as the oxidation reactions of the above Function 2, the following neutralization reactions occur, thereby producing a salt which is a solid phase product.

   2ClO + 2Ca(OH)₂ → CaCl₂·Ca(OH)₂ H₂0 + 3/20₂

   H₂S0₄ + Ca(OH)₂ → CaS0₄ + 2H₂O

   2HNO₃ + + Ca(OH)₂ → Ca(NO₃)₂ + 2H₂O
With the above mentioned three kinds of functions simultaneously, the harmful gas contents are rendered harmless and the solid phase product can be recovered.

In addition, since it is known that the organochloric compounds of dioxine and related compounds in the exhaust gas is generated at relatively high temperatures (about 300°C and above), the exhaust gas is fed to the reactor and the alkaline slurry is atomized into the exhaust gas to lower the temperature by means of the latent heat of vaporization of water, thereby controlling the occurrence of a latent dioxine. At the same time, by irradiating with the radial rays, chemical actives of OH, H, and so on are produced. These radicals react with dioxine directly so that the chlorine atom is separated from the benzene ring and the benzene ring is opened. As a result, it is possible to make the chain into a harmless stable material.

This invention can be more fully understood from the following detailed description when taken in conjunction with the accompanying drawings, in which:
Fig. 1 is a flow chart including a device for realizing the method of the present invention;
Fig. 2 is a diagram showing the relationship between the absorbed dose and the rejection ratio of the harmful gas according to the present invention; and
Figs. 3 and 4 are flow charts showing the different conventional methods for removing harmful gas in the refuse combustion exhaust gas.

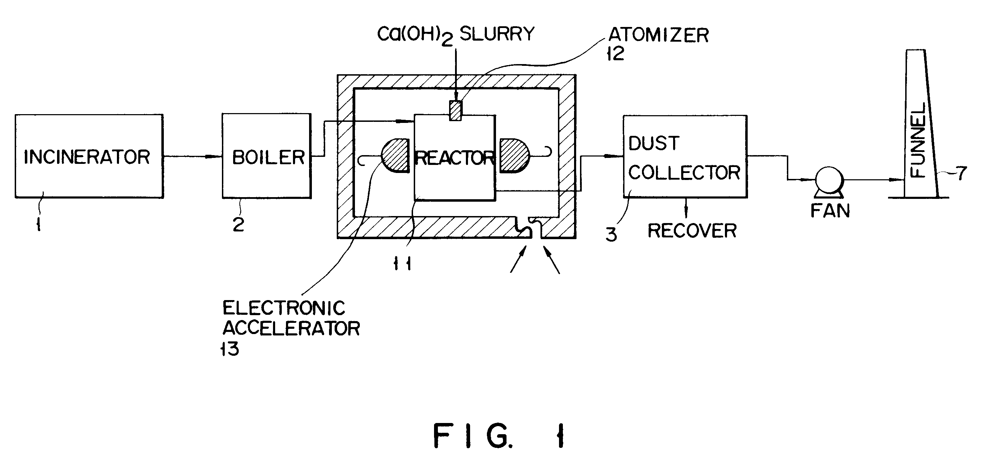

Hereinafter, reference is made to one embodiment of the present invention using Fig. 1.

A simulation refuse combustion exhaust gas including about 100 ppm of NO concentration, about 100 ppm of S0₂ concentration, and about 1000 ppm of HCl concentration was heated to 150 to 300°C, more preferably to 150 to 250°C, and the resulting gas was fed into the reactor 11 for removing harmful gas.

The reactor 11 had a volume of about 80 l and had a constitution in which Ca(OH)₂ can be finely atomized as the alkaline material externally by an atomizer 12. Further, the reactor 11 also had a structure to allow the radiation such as an electron beam to be applied from the side by, for example, an electronic accelerator 13.

One to 30 kGy of absorbed dose was applied by a Cockcroft-Walton electron beam accelerator 13, under ordinary conditions. That is, for a gas quantity of 2.8 Nm³/h and a water content of 20 to 30%. The mole ratio of alkali material to acid was 1 to 3 times the stoichiometic amount required for neutralizing the acid.

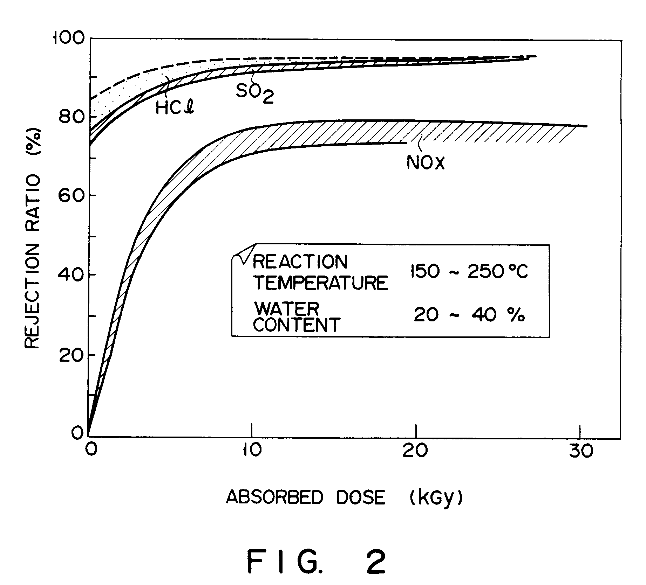

Although there was a large amount of hydrogen chloride within the reactor 11 for removing harmful gas, the above mentioned functions 1 to 3 proceeded rapidly. The rejection ratio of harmful components (concentration), measured in the post-process of the dust collector 3 for recovering solid salt reduced by the neutralization reaction, is shown in Fig. 2. Namely, the shown effects can be expected.

A result of a further test with the exhaust gas including dioxine under the same device and conditions, shows that there is no change of the number of chlorine atoms and conversion to an isomer and to the harmful 2, 3, 7, 8-TCDDs decreases to achieve harmlessness of gas.

The radical rays of radiation can be obtained from X-rays, electron beam, corpuscular beam, α-ray, β-ray, γ-ray, or ultraviolet rays and so on from a device for generating radial rays, a corpuscular accelerator, or a radioactive isotope. The needed absorbed dose and other conditions are not restricted to that disclosed herein.

As mentioned above, the present invention relates to a method for removing harmful gas in the refuse combustion exhaust gas, wherein the following advantages are realized.
1) The extraction ratio of the hydrogen chloride and sulfur oxides improves and the extraction ratio of nitrogen oxides also improves in accordance with the increment of the absorbed dose, which makes it possible to cope with changes of regulation in the future.
2) It is possible to remove the hydrogen chloride, sulfur oxides, and nitrogen oxides contained in the exhaust gas simultaneously by means of a single tower for removing harmful gas and it is possible to render the organo-chloric compound harmless, thereby realizing i) space-saving, ii) reduction of the needed power for a fan, and iii) simple maintenance.
3) The catalyst for denitration by reduction is not needed.
4) The gas temperature at an outlet of the boiler can be controlled to about 200°C, thereby increasing boiler heat recovery.
5) It is possible to remove all harmful gas components with only Ca(OH)₂, which is very cheap.
6) Since the gas temperature at the inlet of the dust collector is very low, it is possible to realize the dust collector having small size and small volume.
7) Since NH₃, which is the poisonous substance, is not needed, i) the blindings and corrosion due to acid ammonium sulfate do not occur, and ii) since ammonium chloride does not occur, there is no possibility of it being seen as the white vapour.
8) Since water is used only for controlling calcium hydroxide slurry, the amount to be used can be extremely reduced.
9) Since the reaction product is always extracted in the form of a solid dry salt, it is not needed to provide a gas washing equipment, dilution water, and a complicated effluent treatment at all.
10) Since the temperature of gas generated from the dust collector is about 120°C, the reheater 6 for solving problems caused by the low temperature of gas after washing is not needed, thereby reducing energy extremely.

## Claims

1. A method of removing harmful gas from a refuse combustion exhaust gas, the method including contacting the exhaust gas with an alkaline material and radiation,
characterized by the steps of:
- supplying the refuse combustion exhaust gas, containing the harmful gas including hydrogen chloride, SOₓ, NOₓ, dioxine and related compounds, into a reactor (11);
- atomizing an alkaline material in the form of an alkaline slurry and introducing same into the reactor, so that the temperature within the reactor is decreased to the range of 150 to 300°C;
- simultaneous with the atomizing step, applying radiation, such as an electron beam, to the reactor;
- allowing oxidation and neutralization reactions to occur between the resulting components in the reactor; and
- recovering salts produced by the neutralization reactions.

2. The method according to claim 1, wherein said alkaline material is a calcium hydroxide slurry which is used to produce active radicals which decompose the dioxine and related compounds contained in the exhaust gas, activate the hydrogen chloride contained in the exhaust gas, oxidize the nitrogen oxides contained in the exhaust gas to nitric acid, and oxidize the sulfur oxides contained in the exhaust gas to sulfuric acid, and to neutralize the activated hydrogen chloride, the nitric acid and the sulfuric acid, thereby forming a salt.

3. A method according to claim 1 or 2, wherein the alkaline slurry is sprayed into the reactor, so that the reactor temperature is maintained in the range of 150 to 250°C.

4. A method according to one of the claims 1 to 3, wherein the alkaline slurry is sprayed into the reactor, so that the water content of the exhaust gas is from 20 to 40%.

## Patentansprüche

1. Verfahren zum Entfernen von schädlichem Gas aus einem Müllverbrennungsabgas, wobei das Verfahren das In-Kontakt-Bringen des Abgases mit einem alkalischen Material und Strahlung aufweist,
gekennzeichnet durch die folgenden Schritte:
- Zuführen des Müllverbrennungsabgases, das das schädliche Gas enthält, das Chlorwasserstoff, SOₓ, NOₓ und eine Dioxingruppe aufweist, in einen Reaktor (11);
- Zerstäuben eines alkalischen Materials in Form einer alkalischen Aufschlämmung und Einleiten derselben in den Reaktor, so daß die Temperatur in dem Reaktor auf den Bereich von 150-300 °C herabgesetzt wird;
- gleichzeitig mit dem Zerstäubungsschritt, Aufbringen von Strahlung wie etwa eines Elektronenstrahls auf den Reaktor;
- Zulassen des Auftretens von Oxidations- und Neutralisierungsreaktionen zwischen den resultierenden Komponenten in dem Reaktor; und
- Rückgewinnen von Salzen, die durch die Neutralisierungsreaktionen erzeugt werden.

2. Verfahren nach Anspruch 1, wobei das alkalische Material eine Calciumhydroxid-Aufschlämmung ist, die eingesetzt wird, um die in dem Abgas enthaltene Dioxingruppe abzubauen, den in dem Abgas enthaltenen Chlorwasserstoff zu aktivieren, die in dem Abgas enthaltenen Stickoxide zu Salpetersäure zu oxidieren und die in dem Abgas enthaltenen Schwefeloxide zu Schwefelsäure zu oxidieren und den aktivierten Chlorwasserstoff, die Salpetersäure und die Schwefelsäure zu neutralisieren, um dadurch ein Salz zu bilden.

3. Verfahren nach Anspruch 1 oder 2, wobei die alkalische Aufschlämmung in den Reaktor eingesprüht wird, so daß die Reaktortemperatur in dem Bereich von 150-250 °C gehalten wird.

4. Verfahren nach einem der Ansprüche 1-3, wobei die alkalische Aufschlämmung in den Reaktor eingesprüht wird, so daß der Wasseranteil des Abgases 20-40 % beträgt.

## Revendications

1. Procédé pour éliminer des gaz toxiques d'un gaz d'échappement de la combustion de déchets, le procédé comprenant nant le fait de mettre en contact le gaz d'échappement avec un matériau alcalin et avec des radiations, caractérisé par les étapes consistant à:
- amener le gaz d'échappement de la combustion de déchets, qui contient le gaz toxique incluant du chlorure d'hydrogène, du SOₓ, du NOₓ, de la dioxine et des composés apparentés, dans un réacteur (11),
- pulvériser un matériau alcalin sous forme d'une suspension alcaline épaisse et introduire celle-ci dans le réacteur afin que la température à l'intérieur du réacteur diminue jusqu'à la plage allant de 150 à 300°C,
- simultanément à l'étape de pulvérisation, appliquer une radiation, comme un faisceau d'électrons au réacteur,
- laisser se produire des réactions d'oxydation et de neutralisation entre les composants résultants dans le réacteur, et
- récupérer les sels produits par les réactions de neutralisation.

2. Procédé selon la revendication 1, dans lequel ledit matériau alcalin est une suspension épaisse d'hydroxyde de calcium qui est utilisée pour produire des radicaux actifs qui décomposent la dioxine et les composés apparentés contenus dans le gaz d'échappement, activer le chlorure d'hydrogène contenu dans le gaz d'échappement, oxyder les oxydes d'azote contenus dans le gaz d'échappement en de l'acide nitrique et oxyder les oxydes de soufre contenus dans le gaz d'échappement en acide sulfurique, et pour neutraliser le chlorure d'hydrogène activé, l'acide nitrique et l'acide sulfurique en formant de ce fait un sel.

3. Procédé selon la revendication 1 ou 2, dans lequel la suspension alcaline épaisse est pulvérisée dans le réacteur si bien que la température du réacteur est maintenue dans la plage allant de 150 à 250°C.

4. Procédé selon l'une des revendications 1 à 3, dans lequel la suspension alcaline épaisse est pulvérisée dans le réacteur si bien que la teneur en eau du gaz d'échappement est comprise entre 20 et 40%.
